# EUROPÄISCHE PATENTSCHRIFT

(11) **EP 1 597 991 B1**
(45) Veröffentlichungstag und Bekanntmachung des Hinweises auf die Patenterteilung: **30.04.2008**
(21) Anmeldenummer: 05103234.0
(22) Anmeldetag: 21.04.2005
(51) Int. Cl.: A47J 42/50

(54) **Mahlvorrichtung für Kaffeebohnen**
Device for grinding coffee beans
Dispositif pour moudre des grains de café

(30) Priorität: 19.05.2004 DE 102004024713
(43) Veröffentlichungstag der Anmeldung: 23.11.2005
(73) Patentinhaber: MELITTA HAUSHALTSPRODUKTE GmbH & Co. Kommanditgesellschaft, D-32427 Minden (DE)
(72) Erfinder: Rohde, Florian, 32427 Minden (DE)
(74) Vertreter: Dantz, Jan Henning

(56) Entgegenhaltungen:
- DE-C- 509 864
- DE-C- 572 572
- DE-C- 594 983

## Beschreibung

Die vorliegende Erfindung betrifft eine Mahlvorrichtung für Kaffeebohnen.

Aus der EP 424 326 ist eine Mahlvorrichtung für Kaffeebohnen bekannt, bei der oberhalb eines Mahlwerkes zwei Vorratsbehälter für Kaffeebohnen angeordnet sind. Jeder Vorratsbehälter weist eine Dosierkammer auf, die eine verschiebbare untere Dosierwand aufweist, um aus dem jeweiligen Vorratsbehälter Kaffeebohnen zuzuführen. Zwar können durch diese Anordnung unterschiedliche Typen von Kaffeebohnen dem Mahlwerk zugeführt werden, der mechanische Aufbau durch die verschiedenen Vorratsbehälter und Dosiervorrichtungen ist jedoch aufwendig.

Aus der EP 452 214 ist eine Dosier- und Brühvorrichtung bekannt, bei der zwei Bohnenbehälter vorgesehen sind, die jeweils einer Kaffeemühle zugeordnet sind. Die gewünschte Kaffeesorte kann durch die Betätigung der entsprechenden Mühle gewählt werden. Damit kann zwar eine Auswahl der Kaffeesorte getroffen werden, der Aufbau mit zwei Kaffeemühlen ist jedoch aufwendig und teuer in der Herstellung.

Aus der DE 509 864 ist eine Kaffeemühle mit unterteiltem Behälter und um eine waagerechte Achse am unteren Ende der Trennwand schwenkbare Absperrvorrichtung bekannt, die es ermöglicht, unterschiedliche Kaffeesorten in den Behälter einzufüllen und dann wahlweise eine Sorte der Mühle zuzuführen.

Es ist daher Aufgabe der vorliegenden Erfindung eine Mahlvorrichtung für Kaffeebohnen zu schaffen, die bei einfachem Aufbau eine Auswahl unterschiedlicher Kaffeesorten ermöglicht.

Diese Aufgabe wird mit einer Mahlvorrichtung für Kaffeebohnen mit den Merkmalen des Anspruches 1 gelöst.

Erfindungsgemäß ist über dem Mahlwerk ein Vorratsbehälter angeordnet, in dem mindestens zwei durch eine Trennwand geteilte Abteilungen für unterschiedliche Kaffeebohnen ausgebildet sind, wobei im Boden des Vorratsbehälters eine durch eine verschwenkbare Klappe verschließbare Öffnung zur Auswahl der Zuführung von Kaffeebohnen aus einer der Abteilungen und/oder zum Verschließen der Öffnung vorgesehen ist. Dadurch können in einem Vorratsbehälter mindestens zwei unterschiedliche Kaffeesorten gelagert und einem Mahlwerk zugeführt werden. Hierfür ist an dem Boden eine verschwenkbare Klappe vorgesehen, die eine entsprechende Zuführung von Kaffeebohnen aus einer der Abteilungen ermöglicht. Ferner ist in dem Vorratsbehälter noch eine dritte Abteilung für gemahlenen Kaffee getrennt von der ersten und zweiten Abteilung vorgesehen, der mit einem Kanal zur Umgehung des Mahlwerks verbindbar ist. Die so gestaltete Mahlvorrichtung eignet sich besonders gut für Kaffeeautomaten.

Gemäß einer bevorzugten Ausführungsform ist die Klappe an der Trennwand verschwenkbar gelagert. Dadurch bleibt die Mahlvorrichtung einfach aufgebaut und die Klappe kann einen Teil der Trennwand für die Kaffeeauswahl ausbilden. Hierbei kann die Klappe an einer durch den Vorratsbehälter geführten Welle festgelegt sein, sodass von außerhalb des Vorratsbehälters ein Drehen der Welle für eine entsprechende Schwenkbewegung sorgt.

Um ein Verklemmen von Kaffeebohnen zwischen Klappe und Vorratsbehälter zu vermeiden, weist die Klappe vorzugsweise einen gerundeten Bodenabschnitt auf, der auch kleiner als die Öffnung in dem Boden des Vorratsbehälters sein kann. Für eine Trennung der beiden Abteilungen weist die Klappe eine Zwischenwand auf, die in einer mittleren Position mit der im Vorratsbehälter montierten Trennwand fluchten kann.

Vorzugsweise weist die Klappe sich senkrecht zur Drehachse erstreckende Seitenwände auf, die verhindern, dass in einer geöffneten Position der Klappe ein Durchzug zwischen den beiden Abteilungen entsteht. Denn in der Auswahlstellung soll die bodenseitige Öffnung zum Mahlwerk freigegeben sein und zwischen der fest im Vorratsbehälter montierten Trennwand und einer Trennwand der Klappe kann somit ein Spalt ausgebildet sein, der durch entsprechende Seitenwände überdeckt wird.

Für eine einfache Montage ist die Trennwand in den Vorratsbehälter einschiebbar.

Die Erfindung wird nachfolgend anhand eines Ausführungsbeispieles mit Bezug auf die beigefügten Zeichnungen näher erläutert. Es zeigen:
- Figur 1: eine perspektivische Explosionsdarstellung eines Ausführungsbeispiels einer erfindungsgemäßen Mahlvorrichtung, und

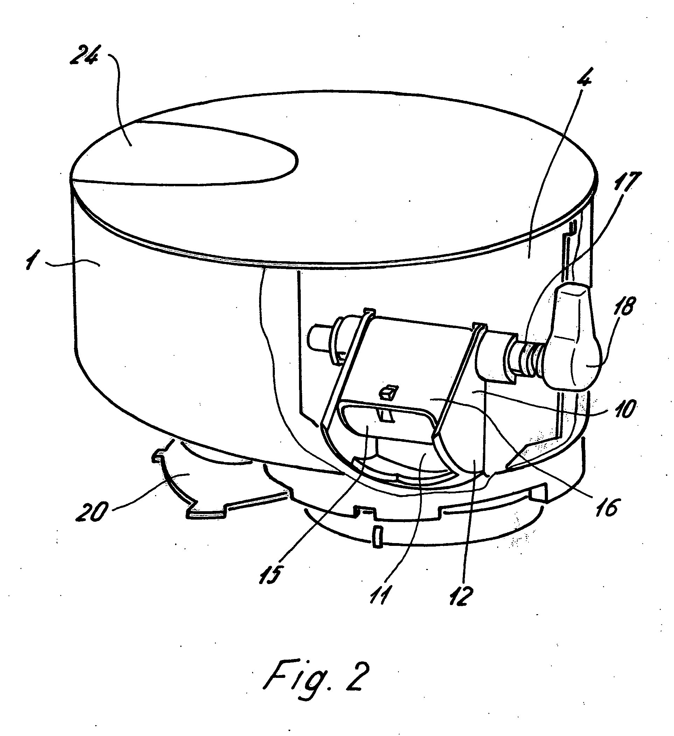

- Figur 2: eine perspektivische Ansicht der Mahlvorrichtung der Figur 1 im zusammengebauten Zustand.

Eine Mahlvorrichtung für Kaffeebohnen umfasst einen Vorratsbehälter 1, der oberhalb eines nicht dargestellten Mahlwerkes angeordnet ist. Der Vorratsbehälter 1 weist einen Innenraum 2 auf, der von einer Abteilung 3 für gemahlenen Kaffee getrennt ist. Zur Ausbildung von zwei Abteilungen in dem Vorratsbehälter 1 ist eine Trennwand 4 vorgesehen, die in den Vorratsbehälter 1 einschiebbar ist und dort über seitlich hervorstehende Vorsprünge 5 fixierbar ist.

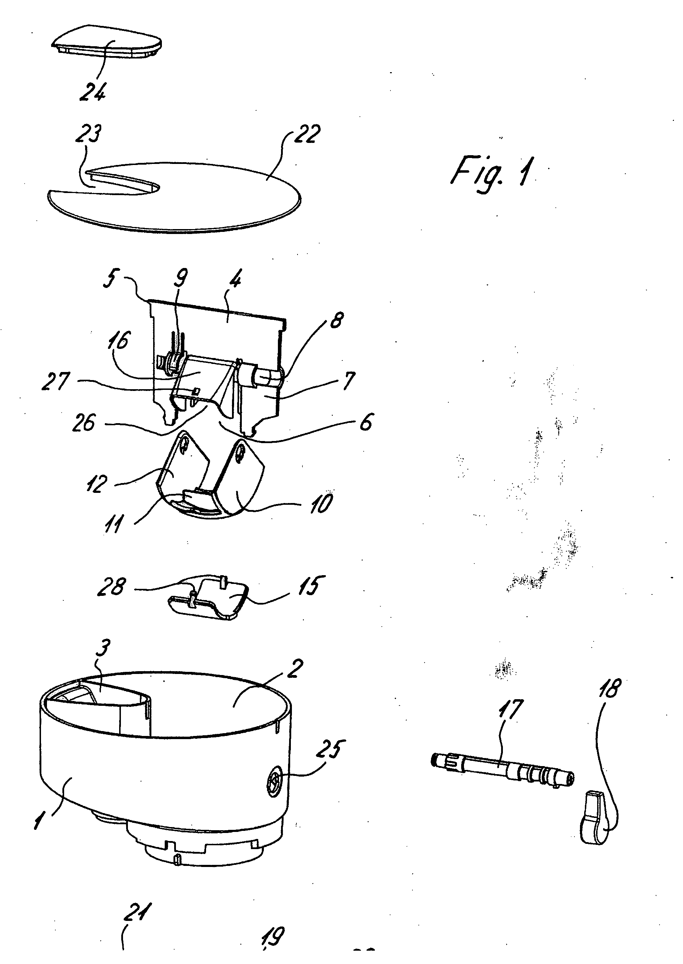

Die Trennwand 4 weist im unteren Bereich eine Aussparung 6 auf, die von zwei Seitenteilen 7 umgeben ist. In dem in Figur 1 rechten Seitenteil 7 ist eine Öffnung 8 und an der gegenüberliegenden Seite eine Aussparung 9 vorgesehen, an denen eine Welle 17 durchgeführt und gelagert werden kann.

Um eine Auswahl bei der Zuführung von Kaffeebohnen zu ermöglichen, ist an der Trennwand 4 eine verschwenkbare Klappe 10 angeordnet, die eine mittige Trennwand 11 aufweist, die in einer mittleren Position der Klappe 10 mit der Ebene der Trennwand 4 fluchtet. An zwei gegenüberliegenden Seiten weist die Klappe 10 zu einer Drehachse sich senkrecht erstreckende Seitenwände 12 auf, die sich von einer Drehachse zu einem Bodenabschnitt 13 erstrecken. An der Trennwand 4 sind im Bereich der Klappe 10 schräg nach unten verlaufende Wände 16 angeformt, die verhindern, dass ein Benutzer von oben versehentlich in das Mahlwerk eingreift. Unterhalb der Wände 16 ist ein Hohlraum 26 gebildet, der durch eine Abdeckung 16 verschlossen wird, die über Rastnasen 28 in Aussparungen 27 einklemmbar ist. Dadurch können sich unmittelbar oberhalb einer Öffnung 19 in einem mittigen Bereich unter der Trennwand 4 keine oder nur wenige Kaffeebohnen auf der Klappe 10 sammeln.

Ferner weist die Klappe 10 in den Seitenwänden 12 Öffnungen 14 zur Durchführung einer Welle 17 auf. Die Welle 17 ist durch eine Öffnung 25 in einer Wand des Vorratsbehälters 1 durch die Trennwand 4 und die Öffnungen 14 in der Klappe 10 durchgeführt. An der äußeren Seite der Welle 17 ist ein Drehknopf 18 klemmend an der Welle 17 festgelegt.

An der Oberseite ist der Vorratsbehälter 1 durch einen Deckel 22 verschlossen, in dem eine Aussparung 23 angeordnet ist. In der Aussparung 23 ist eine Abdeckung 24 angeordnet, die die Abteilung 3 für gemahlenen Kaffee verschließt.

An der Unterseite des Vorratsbehälters ist ein Kupplungselement 20 vorgesehen, das mit dem Vorratsbehälter 1 verbindbar ist und eine größere Öffnung 19 für die Zuführung von Kaffeebohnen zu einem Mahlwerk und eine kleinere Öffnung 21 für die Verbindung mit einem Kanal zur Umgehung des Mahlwerks aufweist.

Sofern kein gemahlener Kaffee in der Abteilung 3 angeordnet ist, erfolgt die Zufuhr von Kaffeebohnen aus einer der gebildeten Abteilungen in dem Vorratsbehälter 1, wobei über die Klappe 10 eine Auswahl getroffen wird. Die Kaffeebohnen können je nach Stellung der Klappe 10 durch die Öffnung 19 dem Mahlwerk zugeführt werden.

Die Erfindung ist nicht auf das dargestellte Ausführungsbeispiel beschränkt. In dem Ausführungsbeispiel sind zwei Abteilungen durch eine montierbare Trennwand 4 ausgebildet und eine dritte Abteilung für gemahlenen Kaffee ist getrennt angeordnet. Es ist in den Grenzen von Anspruch 1 auch möglich, drei verschiedene Abteilungen vorzusehen, die mittels einer verschwenkbaren Klappe voneinander getrennt sind und eine wahlweise Zufuhr von Kaffeebohnen zu einem Mahlwerk ermöglichen. Dabei kann die Geometrie des Vorratsbehälters 1 auch angepasst werden, beispielsweise kann eine keilförmige nach oben sich aufweitende Geometrie gewählt werden.

Für eine kostengünstige Herstellung der Mahlvorrichtung kann der Vorratsbehälter 1 und die entsprechenden Bauteile zur Auswahl der Kaffeebohnenzufuhr aus Kunststoff hergestellt werden.

## Patentansprüche

1. Mahlvorrichtung für Kaffeebohnen, mit einem Mahlwerk und einem darüber angeordneten Vorratsbehälter (1), in dem mindestens zwei durch eine Trennwand (4) geteilte Abteilungen für unterschiedliche Kaffeebohnen ausgebildet sind, wobei im Boden des Vorratsbehälters (1) eine durch eine verschwenkbare Klappe (10) verschließbare Öffnung (19) zur Auswahl der Zuführung von Kaffeebohnen aus einer der Abteilungen und/oder zum Verschließen der Öffnung (19) vorgesehen ist, **dadurch gekennzeichnet, dass** in dem Vorratsbehälter (1) eine dritte Abteilung für gemahlenen Kaffee getrennt von einer ersten und zweiten Abteilung ausgebildet ist, die am Boden eine verschließbare Öffnung (21) zu einem Kanal zur Umgehung des Mahlwerks aufweist.

2. Mahlvorrichtung nach Anspruch 1, **dadurch gekennzeichnet, dass** die Klappe (10) an der Trennwand (4) verschwenkbar gelagert ist.

3. Mahlvorrichtung nach Anspruch 1 oder 2, **dadurch gekennzeichnet, dass** die Klappe an einer durch den Vorratsbehälter (1) geführten Welle (17) festgelegt ist.

4. Mahlvorrichtung nach einem der Ansprüche 1 bis 3, **dadurch gekennzeichnet, dass** die Klappe (10) einen gerundeten Bodenabschnitt (13, 15) aufweist.

5. Mahlvorrichtung nach einem der Ansprüche 1 bis 4, **dadurch gekennzeichnet, dass** die Klappe (10) eine Zwischenwand (11) aufweist, mit der die Abteilungen voneinander getrennt sind.

6. Mahlvorrichtung nach einem der Ansprüche 1 bis 5, **dadurch gekennzeichnet, dass** die Klappe (10) sich senkrecht zur Drehachse erstreckende Seitenwände (12) aufweist, die verhindern, dass in einer geöffneten Position der Klappe (10) ein Durchgang zwischen den beiden Abteilungen entsteht.

7. Mahlvorrichtung nach einem der Ansprüche 1 bis 6, **dadurch gekennzeichnet, dass** oberhalb der verschließbaren Öffnung (19) und einem Boden der Klappe (10) ein Hohlraum (26) ausgebildet ist, der zwei sich schräg von der Trennwand (4) erstreckende Wände aufweist.

8. Mahlvorrichtung nach Anspruch 7, **dadurch gekennzeichnet, dass** der Hohlraum nach unten durch eine Abdeckung (15) verschlossen ist.

9. Mahlvorrichtung nach einem der Ansprüche 1 bis 8, **dadurch gekennzeichnet, dass** die Trennwand (4) in dem Vorratsbehälter (1) einschiebbar ist.

## Claims

1. Device for grinding coffee beans, having a grinding unit and a supply container (1) which is arranged over the same and in which are formed at least two compartments, separated by a partition wall (4), for different coffee beans, the base of the supply container (1) containing an opening (19) which is intended for selecting the feed of coffee beans from one of the compartments and/or can be closed by a pivotable flap (10), **characterized in that** the supply container (1) contains a third compartment, for ground coffee, which is separate from a first and second compartment and, in the base, has a closable opening (21) to a channel for bypassing the grinding unit.

2. Grinding device according to Claim 1, **characterized in that** the flap (10) is mounted in a pivotable manner on the partition wall (4).

3. Grinding device according to Claim 1 or 2, **characterized in that** the flap is secured on a shaft (17) which is guided through the supply container (1).

4. Grinding device according to one of Claims 1 to 3, **characterized in that** the flap (10) has a rounded base portion (13, 15).

5. Grinding device according to one of Claims 1 to 4, **characterized in that** the flap (10) has an intermediate wall (11) which separates the compartments from one another.

6. Grinding device according to one of Claims 1 to 5, **characterized in that** the flap (10) has side walls (12) which extend perpendicularly to the axis of rotation and prevent through-passage between the two compartments in an open position of the flap (10).

7. Grinding device according to one of Claims 1 to 6, **characterized by** the provision, above the closable opening (19) and a base of the flap (10), of a cavity (26) which has two walls extending obliquely from the partition wall (4).

8. Grinding device according to Claim 7, **characterized in that** the cavity is closed in the downward direction by a covering (15).

9. Grinding device according to one of Claims 1 to 8, **characterized in that** the partition wall (4) can be pushed into the supply container (1).

## Revendications

1. Dispositif pour moudre des grains de café, avec un broyeur et un réservoir (1) disposé sur celui-ci, dans lequel au moins deux unités séparées par une paroi de séparation (4) pour différents grains de café sont réalisées, une ouverture (19) étant prévue dans le fond du réservoir (1) pouvant être fermée par un clapet (10) pivotant pour sélectionner l'alimentation en grains de café depuis l'une des unités et/ou pour fermer l'ouverture (19), **caractérisé en ce qu'**une troisième unité pour du café moulu est réalisée dans le réservoir (1) à part d'une première et deuxième unités, laquelle présente sur le fond une ouverture (21) pouvant être fermée, menant à un canal servant à contourner le broyeur.

2. Dispositif pour moudre selon la revendication 1, **caractérisé en ce que** le clapet (10) est logé de manière pivotante sur la paroi de séparation (4).

3. Dispositif pour moudre selon la revendication 1 ou 2, **caractérisé en ce que** le clapet est fixé sur un arbre (17) traversant le réservoir (1).

4. Dispositif pour moudre selon l'une quelconque des revendications 1 à 3, **caractérisé en ce que** le clapet (10) présente une section de fond (13, 15) arrondie.

5. Dispositif pour moudre selon l'une quelconque des revendications 1 à 4, **caractérisé en ce que** le clapet (10) présente une paroi de séparation (11), à l'aide de laquelle les unités sont séparées les unes des autres.

6. Dispositif pour moudre selon l'une quelconque des revendications 1 à 5, **caractérisé en ce que** le clapet (10) présente des parois latérales (12) s'étendant perpendiculairement à l'axe de rotation, qui évitent qu'un passage n'apparaisse entre les deux unités lorsque le clapet (10) est en position ouverte.

7. Dispositif pour moudre selon l'une quelconque des revendications 1 à 6, **caractérisé en ce qu'**un espace creux (26) est réalisé au-dessus de l'ouverture (19) pouvant être fermée et un fond du clapet (10), lequel présente deux parois s'étendant de biais depuis la paroi de séparation (4).

8. Dispositif pour moudre selon la revendication 7, **caractérisé en ce que** l'espace creux est fermé vers le bas par un élément de recouvrement (15).

9. Dispositif pour moudre selon l'une quelconque des revendications 1 à 8, **caractérisé en ce que** la paroi de séparation (4) peut être insérée dans le réservoir (1).
